# EUROPEAN PATENT APPLICATION

(11) **EP 4 852 209 A1**
(43) Date of publication of application: **09.12.2026**
(21) Application number: 24921502.1
(22) Date of filing: 09.10.2024
(51) Int. Cl.: H01M 50/593, H01M 50/15, H01M 50/184

(54) **BATTERY, BATTERY MODULE, AND ELECTRIC DEVICE**

(30) Priority: 04.02.2024 CN 202420275288 U
(71) Applicant: CONTEMPORARY AMPEREX TECHNOLOGY (HONG KONG) LIMITED, Hong Kong (HK)
(72) Inventor: SU, Huasheng, Ningde, Fujian 352100 (CN); YANG, Xiao, Ningde, Fujian 352100 (CN); LI, Can, Ningde, Fujian 352100 (CN); YANG, Rui, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2024/123725
(87) International publication number: WO 2025/161478

(57) **Abstract**

A battery (100), a battery module, and an electric device are provided. The battery (100) includes a top cover body (10), a pole (30), an insulator (50), and a sealing ring (70). The top cover body (10) is provided with a mounting hole (11). The pole (30) includes a base plate (32) and a pole body (31) that are connected with each other. The base plate (32) is located on one side of the top cover body (10). The pole body (31) extends through the mounting hole (11). At least part of the insulator (50) is disposed on another side of the top cover body (10). The insulator (50) is annularly disposed on a periphery of the pole body (31) and fastens the pole (30) to the top cover body (10). An extension portion (51) is formed on one side of the insulator (50) facing the base plate (32), and the extension portion (51) is located between a hole wall of the mounting hole (11) and the pole body (31). The sealing ring (70) is located between the top cover body (10) and the base plate (32) and annularly disposed on the periphery of the pole body (31). The sealing ring (70) and the extension portion (51) at least partially overlap in an axial direction of the pole body (31).

## Description

This application claims priority to the Chinese Patent Application No. 202420275288.2 filed on February 4, 2024, which is incorporated herein by reference in its entirety.

### TECHNICAL FIELD

This application relates to the field of battery technologies, and in particular, to a battery, a battery module, and an electric device.

### BACKGROUND

Traction batteries generally include a cell and a metal housing configured to accommodate the cell. The metal housing generally includes a housing body and a top cover that are connected to each other. The cell is located in the housing body, and the top cover covers an opening of the housing body to seal the interior of the battery, prevent leakage inside the battery, extend the service life of the battery, and ensure the safety of the battery. Therefore, the quality of the top cover directly affects the performance of the battery.

The top cover is generally provided with a mounting hole, and a pole extends through the mounting hole and is exposed to the outside. To improve the sealing and insulation of the battery, an insulator located between the pole and an outer surface of the top cover is generally formed through injection molding, and a sealing ring is provided between the pole and a lower surface of the top cover for sealing. The insulator abuts the sealing ring via the mounting hole. However, the existing sealing ring is generally planar and sleeved on a periphery of the pole. Since the contact between the sealing ring and the insulator is flat contact, a creepage distance between the pole and a top cover body is relatively short, which cannot satisfy projects with high-voltage requirements.

### SUMMARY

The main purpose of this application is to provide a battery, aiming to increase a creepage distance between a top cover body and a pole in the battery.

To achieve the above purpose, the battery proposed in this application includes:
a top cover body, where the top cover body is provided with a mounting hole;
a pole, where the pole includes a base plate and a pole body that are connected to each other, the base plate is located on one side of the top cover body, and the pole body extends through the mounting hole;
an insulator, where at least part of the insulator is disposed on another side of the top cover body, the insulator is annularly disposed on a periphery of the pole body and fastens the pole to the top cover body, an extension portion is formed on a side of the insulator facing the base plate, and the extension portion is located between a hole wall of the mounting hole and the pole body; and
a sealing ring, where the sealing ring is located between the top cover body and the base plate and annularly disposed on the periphery of the pole body, and the sealing ring and the extension portion at least partially overlap in an axial direction of the pole body.

The top cover body covers the opening of the housing, the pole body of the pole is disposed in the mounting hole and electrically connected to the interior through the base plate, and the sealing ring is annularly disposed on the periphery of the pole body and located between the top cover body and the base plate, thereby sealing the interior of the housing and preventing liquid leakage. Herein, the insulator is a structure formed through injection molding. The sealing ring and the extension portion of the insulator at least partially overlap in the axial direction of the pole body, increasing an abutting area between the sealing ring and the extension portion in the vertical direction without reducing a contact area therebetween in a lateral direction, thereby increasing a creepage distance between the pole and the top cover body, preventing short circuits, and enabling application of the battery top-cover structure to projects with high-voltage requirements.

In an embodiment of this application, a reinforcing portion protrudes from a side of the sealing ring facing the insulator, and the reinforcing portion extends into the mounting hole and overlaps with the extension portion in the axial direction of the pole body.

Herein, the reinforcing portion is added to the sealing ring, extending into the mounting hole and overlapping with the extension portion in the vertical direction, thereby increasing the creepage distance while enhancing the strength of the sealing ring, reducing displacement due to fluid force during the injection molding, and ensuring the stability of the sealing ring during the injection molding.

In an embodiment of this application, the reinforcing portion is located between the extension portion and the pole body, and abuts the periphery of the pole body.

Herein, the reinforcing portion is disposed on a side of the sealing ring close to the pole body, thereby increasing an area for contact with the pole body, improving the stability of connection with the pole body, and further reducing displacement of the sealing ring during the injection molding.

In an embodiment of this application, the reinforcing portion is annular and contacts the periphery of the pole body, and the extension portion is annular and annularly disposed between the hole wall of the mounting hole and the reinforcing portion;
and/or a longitudinal section of the reinforcing portion is rectangular.

The annular reinforcing portion and the annular extension portion can maximize the abutting area between the sealing ring and the extension portion, thereby increasing creepage distances at various positions of the pole and further improving the stability of the connection with the pole body.

The reinforcing portion with a rectangular longitudinal section is easy to process.

In an embodiment of this application, in the axial direction of the pole body, a ratio of an overlapping height between the reinforcing portion and the extension portion to a depth of the mounting hole is at least 1/4 and not greater than 3/4.

This ratio range can increase the creepage distance between the pole and the top cover body, and facilitate processing and assembly.

In an embodiment of this application, the reinforcing portion satisfies one of the following conditions:
in the axial direction of the pole body, a height value of the reinforcing portion is at least 0.8 mm and not greater than 1.2 mm; or
herein, based on a dimension of a conventional battery top-cover structure, the height of the reinforcing portion is set to an appropriate range, so that the creepage distance requirement can be satisfied and processing and assembly can be facilitated;
in a radial direction of the pole body, a ratio of a thickness of the reinforcing portion to a distance between the pole body and the hole wall of the mounting hole is at least 1/2 and not greater than 2/3; or
herein, the thickness range of the reinforcing portion can improve structural strength and facilitate processing;
in a radial direction of the pole body, a thickness value of the reinforcing portion is at least 0.5 mm and not greater than 0.7 mm.

The reinforcing portion in this thickness range has high structural strength and good sealing effect.

In an embodiment of this application, an outer side of the reinforcing portion facing away from the pole body is formed with a first step surface and a second step surface arranged at an angle; an inner side of the extension portion is formed with a third step surface and a fourth step surface arranged at an angle; the first step surface contacts the third step surface; and the second step surface contacts the fourth step surface.

The reinforcing portion of this structure can further increase the creepage distance between the pole and the top cover body.

In an embodiment of this application, a groove is recessed in the middle of an outer periphery of the pole body, a convex ring is formed on an inner periphery of the insulator, and the convex ring is engaged in the groove.

The pole body of this structure can increase area for the contact with the insulator and improve the structural stability.

In an embodiment of this application, a maximum outer diameter of the pole body is smaller than a diameter of the mounting hole, an outer diameter of the base plate is greater than the diameter of the mounting hole, the insulator is formed on the top cover body through injection molding, and the extension portion extending into the mounting hole and the convex ring extending into the groove are formed through injection molding.

The extension portion and the convex ring formed through injection molding can closely fit with the reinforcing portion and the groove to achieve better sealing effect.

In an embodiment of this application, a positioning ring protrudes from a surface of the top cover body away from the base plate, a positioning groove is formed in the insulator, and the positioning ring is limited in the positioning groove.

The top cover body of this structure can increase the stability for the connection with the insulator.

This application further proposes a battery module, where the battery includes the battery as described in any of the above embodiments.

This application further proposes an electric device, where the electric device includes the battery module as described above.

### BRIEF DESCRIPTION OF DRAWINGS

To more clearly illustrate the embodiments of this application or the technical solutions in the prior art, the drawings required for the description of the embodiments or the prior art will be briefly introduced below. It is clear that the drawings in the following descriptions are only some embodiments of this application. For those of ordinary skill in the art, other drawings can also be obtained based on the structures shown in these drawings without creative effort.
FIG. 1 is a schematic diagram of a partial structure of a battery according to an embodiment of this application;
FIG. 2 is a cross-sectional view along line A-A in FIG. 1;
FIG. 3 is an enlarged view at B in FIG. 2;
FIG. 4 is an exploded view of a battery top-cover structure shown in FIG. 1;
FIG. 5 is a cross-sectional view of fitting between a sealing ring and an insulator of a battery according to another embodiment of this application;
FIG. 6 is a schematic diagram of a structure of a battery module according to an embodiment of this application; and
FIG. 7 is a schematic diagram of a structure of an exemplary electric device in this application.

Description of reference signs:

| Reference sign | Name | Reference sign | Name |
|---|---|---|---|
| 100 | Battery | 511 | Third step surface |
| 10 | Top cover body | 512 | Fourth step surface |
| 11 | Mounting hole | 52 | Convex ring |
| 12 | Positioning ring | 53 | Positioning groove |
| 30 | Pole | 70 | Sealing ring |
| 31 | Pole body | 71 | Reinforcing portion |
| 311 | Groove | 711 | First step surface |
| 32 | Base plate | 712 | Second step surface |
| 50 | Insulator | 90 | Lower plastic |
| 51 | Extension portion | | |

The realization of the purpose, functional features, and advantages of this application will be further described with reference to the embodiments and the drawings.

### DESCRIPTION OF EMBODIMENTS

The technical solutions in the embodiments of this application will be clearly and completely described below with reference to the drawings in the embodiments of this application. It is clear that the described embodiments are only some but not all embodiments of this application. Based on the embodiments in this application, all other embodiments obtained by those of ordinary skill in the art without creative effort fall within the protection scope of this application.

It should be noted that all directional indications (such as up, down, left, right, front, and back) in the embodiments of this application are only used to explain the relative positional relationships, movement situations, and the like between components in a specific posture (as shown in the drawings). If the specific posture changes, the directional indications change accordingly.

In this application, unless otherwise expressly specified and limited, the terms "connect", "fasten", and the like should be understood in a broad sense. For example, "fasten" may mean a fixed connection, detachable connection, or integral formation; a mechanical connection or electrical connection; a direct connection or indirect connection through an intermediate medium; or internal communication of two elements or interaction between two elements, unless otherwise expressly limited. For those of ordinary skill in the art, the specific meanings of the above terms in this application can be understood based on specific situations.

In addition, descriptions such as "first" and "second" in this application are only for descriptive purposes and cannot be understood as indication or implication of their relative importance or implicit indication of a quantity of indicated technical features. Thus, features defined with "first" and "second" may explicitly or implicitly include at least one such feature. In addition, the meaning of "and/or" appearing throughout the text includes three parallel schemes. For example, "A and/or B" includes scheme A, or scheme B, or schemes where both A and B are satisfied. In addition, technical solutions in these embodiments can be combined with each other, but should be based on what can be achieved by those of ordinary skill in the art. When the combination of technical solutions is contradictory or cannot be achieved, such combination of technical solutions should be considered non-existent and not within the protection scope required by this application.

The batteries mentioned in the art can be classified into primary battery and rechargeable battery according to whether they are rechargeable. Currently common types of rechargeable batteries include: lead-acid batteries, nickel-metal hydride batteries, and lithium-ion batteries. Lithium-ion batteries are currently widely used in pure electric vehicles and hybrid vehicles. Lithium-ion batteries for such uses have a relatively low capacity, but they have large output and charge currents and a long service life, though the costs are high.

The battery described in the embodiments of this application refers to a rechargeable battery. The following mainly describes the embodiments disclosed in this application using a lithium-ion battery as an example. It should be understood that the embodiments disclosed in this application are applicable to any other appropriate type of rechargeable battery. The battery mentioned in the embodiments disclosed in this application can be directly or indirectly applied to an appropriate apparatus to supply power to the apparatus.

A battery cell disclosed in the embodiments of this application may be applied in electric devices such as vehicles, ships, or aircraft, but is not limited thereto. The battery cell, battery, and the like disclosed in this application can be used to form a power supply system of the electric device. The embodiments of this application provide an electric device using a battery as a power source. The electric device may be, but is not limited to, mobile phones, tablets, laptops, electric toys, electric tools, battery scooters, electric vehicles, ships, spacecraft, or the like. The electric toys may include fixed or mobile electric toys, such as game consoles, electric vehicle toys, electric ship toys, and electric airplane toys, and the spacecraft may include airplanes, rockets, space shuttles, spaceships, and the like.

The battery mentioned in the embodiments disclosed in this application refers to a single physical module including one or more battery cells to provide a predetermined voltage and capacity. A battery cell is the basic unit in a battery, including a positive electrode sheet, a negative electrode sheet, an electrolyte, and a separator. Operation of lithium-ion battery cells mainly depends on the movement of lithium ions between the positive electrode sheet and the negative electrode sheet. Generally, based on a packaging method, battery cells may be classified into cylindrical battery cells, rectangular battery cells, and pouch battery cells. The following mainly focuses on rectangular battery cells. It should be understood that the embodiments described below are also applicable to cylindrical battery cells or pouch battery cells in some aspects.

Traction batteries generally include a cell and a metal housing configured to accommodate the cell. The metal housing generally includes a housing body and a top cover that are connected to each other. The cell is located in the housing body, and the top cover covers an opening of the housing body to seal the interior of the battery, prevent leakage inside the battery, extend the service life of the battery, and improve the safety of the battery. Therefore, the quality of the top cover directly affects the performance of the battery.

The top cover is generally provided with a mounting hole, and a pole extends through the mounting hole and is exposed to the outside. To improve the sealing and insulation of the battery, an insulator located between the pole and an outer surface of the top cover is generally formed through injection molding, and a sealing ring is provided between the pole and a lower surface of the top cover for sealing. The insulator abuts the sealing ring via the mounting hole. However, the existing sealing ring is generally planar and sleeved on a periphery of the pole. Since the contact between the sealing ring and the insulator is flat contact, a creepage distance between the pole and a top cover body is relatively short, which cannot satisfy projects with high-voltage requirements.

Therefore, to solve the problem of the insufficient creepage distance between the pole and the top cover body in the battery in the related art, a structure of the sealing ring is improved in this application. The sealing ring at least partially overlaps with the insulator in a vertical direction, to increase the creepage distance between the top cover body and the pole and improve safety.

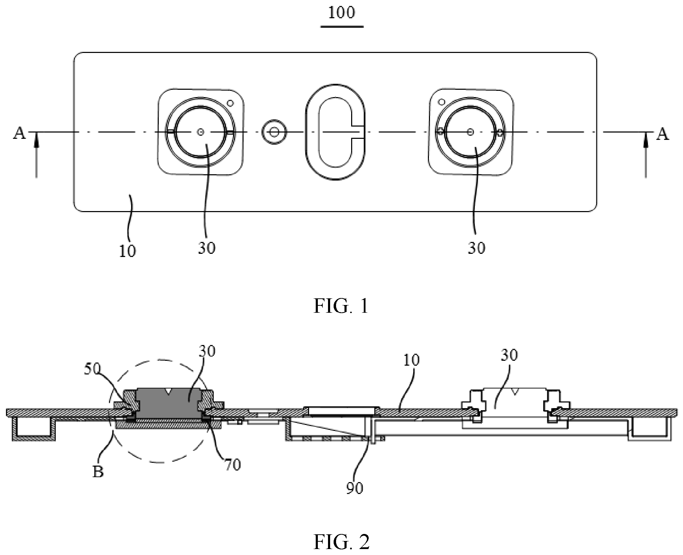

Refer to FIG. 1 to FIG. 3. In an embodiment of this application, a battery top-cover structure 100 includes a top cover body 10, a pole 30, an insulator 50, and a sealing ring 70. The top cover body 10 is provided with a mounting hole 11; the pole 30 includes a base plate 32 and a pole body 31 that are connected to each other; the base plate 32 is located on one side of the top cover body 10; and the pole body 31 extends through the mounting hole 11.

At least part of the insulator 50 is disposed on another side of the top cover body 10. The insulator 50 is annularly disposed on a periphery of the pole body 31 and fastens the pole 20 to the top cover body 10. An extension portion 51 is formed on a side of the insulator 50 facing the base plate 32, and the extension portion 51 is located between a hole wall of the mounting hole 11 and the pole body 31. The sealing ring 70 is located between the top cover body 10 and the base plate 32, and is annularly disposed on the periphery of the pole body 31, and the sealing ring 70 and the extension portion 51 at least partially overlap in an axial direction of the pole body 31.

In an example, the top cover body 10 is sheet-like or plate-like and may cover an opening of a housing in which a cell is mounted. The top cover body 10 is provided with the mounting hole 11, and a dimension and a shape of the mounting hole 11 match a cross-sectional shape and dimension of the pole 30, thereby facilitating the passage of the pole 30 and reducing gaps. In an example, the mounting hole 11 is a circular hole, and a cross-section of the pole 30 is circular. It can be understood that the battery includes a positive electrode pole 30 and a negative electrode pole 30, and in this case, the top cover body 10 is provided with two mounting holes 11, and two poles 30 are provided. Herein, a mounting structure of one pole 30 is taken as an example for description, and a mounting structure of the other pole 30 is correspondingly set.

For convenient mounting, the pole 30 includes the base plate 32 and the pole body 31. The base plate 32 is located on a side of the top cover body 10, that is, a side of the top cover body 10 facing the interior of the housing. For convenient fastening, the pole body 31 extends through the mounting hole 11 and is exposed at the mounting hole 11, thereby facilitating electrical connection during application. A material of the sealing ring 70 may be plastic or silicone, which is not limited herein. The sealing ring 70 is sandwiched between the top cover body 10 and the base plate 32 and annularly disposed on the periphery of the pole body 31, and may be in interference fit with the pole body 31, thereby improving the sealing effect and preventing internal liquid from leaking through the gap between them.

The insulator 50 is a structure formed through injection molding, which is molded based on the assembly structures of the top cover body 10, the pole 30, and the sealing ring 70. First, the sealing ring 70 is mounted on the periphery of the pole body 31, and then the pole body 31 extends through the mounting hole 11 and placed in a mold. Then injection molding material is injected into the mold, to form the insulator 50 after cooling. The insulator 50 formed in this way can fit more closely with the pole 30, the sealing ring 70, and the top cover body 10, improving structural stability. For convenient passage of the pole 30, the hole wall of the mounting hole 11 and the pole 30 are generally in clearance fit, so part of the insulator 50 extends between the pole body 31 and the hole wall of the mounting hole 11, thereby forming the extension portion 51. Herein, the sealing ring 70 and the extension portion 51 at least partially overlap in the axial direction of the pole body 31, that is, at least partially overlap in the vertical direction, or their projections in the radial direction of the mounting hole 11 overlap. A protruding structure of the sealing ring 70 extends into the mounting hole 11, and the extension portion 51 is correspondingly formed in a gap between the sealing ring 70 and the mounting hole 11; or the sealing ring 70 is recessed to form a groove, and the extension portion 51 extends through the mounting hole 11 and extends into the groove. This is not limited herein.

In the battery top-cover structure 100 in this application, the insulator 50 is a structure formed through injection molding. The sealing ring 70 and the extension portion 51 of the insulator 50 at least partially overlap in the axial direction of the pole body 31, increasing an abutting area between the sealing ring 70 and the extension portion 51 in the vertical direction without reducing a contact area therebetween in a lateral direction, thereby increasing a creepage distance between the pole 30 and the top cover body 10, preventing short circuits, and enabling application of the battery top-cover structure 100 to projects with high-voltage requirements.

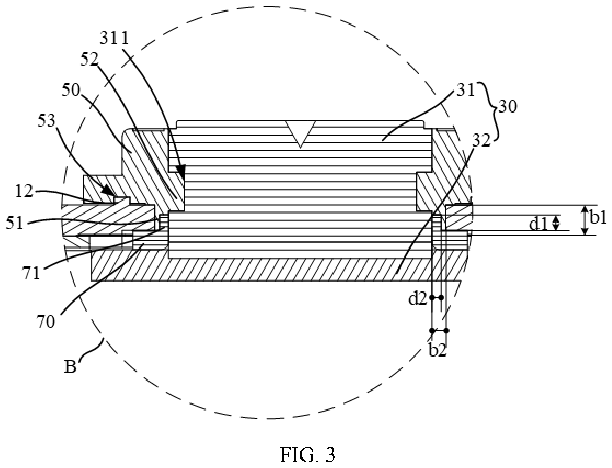

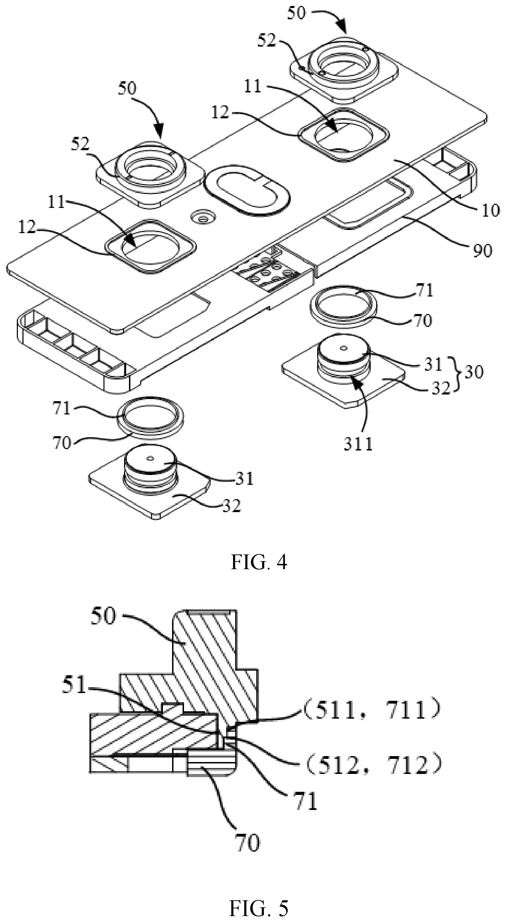

Refer to FIG. 3 and FIG. 4. In an embodiment of this application, a reinforcing portion 71 protrudes from a side of the sealing ring 70 facing the insulator 50, and the reinforcing portion 71 extends into the mounting hole 11 and overlaps with the extension portion 51 in the axial direction of the pole body 31.

In this example, the sealing ring 70 is provided with the reinforcing portion 71, and the reinforcing portion 71 and the sealing ring 70 are integrally molded, which facilitates processing and ensures high structural strength and good sealing. The reinforcing portion 71 extends into the mounting hole 11, leaving a localized gap between the reinforcing portion 71 and the hole wall of the mounting hole 11 or the pole body 31. In this way, during injection molding, the part of the insulator 50 extending into the gap forms the extension portion 51, that is, the extension portion 51 is molded in a space between the reinforcing portion 71 and the hole wall of the mounting hole 11, or a space between the reinforcing portion 71 and the pole body 31, so that the reinforcing portion 71 and the extension portion 51 overlap in the vertical direction.

A shape of the reinforcing portion 71 is not limited, and may be block-shaped or annular. A position of the reinforcing portion 71 in the radial direction may be in the middle of the sealing ring 70 or on any side of the sealing ring 70, which is not limited herein. The provision of the reinforcing portion 71 can increase the creepage distance while enhancing the strength of the sealing ring 70, resisting some liquid impact, thereby reducing a possibility of displacement due to fluid force during the injection molding, and improving the stability of the sealing ring 70 during the injection molding.

Still refer to FIG. 3. In an embodiment of this application, the reinforcing portion 71 is located between the extension portion 51 and the pole body 31, and abuts the periphery of the pole body 31.

In this example, the reinforcing portion 71 is disposed on a side of the sealing ring 70 close to the pole body 31, thereby increasing an area for contact with the pole body 31, improving the stability of connection with the pole body 31, and further reducing displacement of the sealing ring 70 during the injection molding. Optionally, a side of the reinforcing portion 71 facing the pole body 31 is in the same plane as an inner periphery of the sealing ring 70, thereby further improving connection stability and sealing effect.

Refer to FIG. 4. In an embodiment of this application, the reinforcing portion 71 is annular and contacts the periphery of the pole body 31, and the extension portion 51 is annular and annularly disposed between the hole wall of the mounting hole 11 and the reinforcing portion 71;
and/or a longitudinal section of the reinforcing portion 71 is rectangular.

In this example, the annular reinforcing portion 71 and the annular extension portion 51 can maximize the abutting area between the sealing ring 70 and the extension portion 51 in a circumferential direction, thereby increasing creepage distances at various positions of the pole 30. In addition, the annular reinforcing portion 71 can also increase the contact area with the pole body 31, further improving the stability of connection with the pole body 31. Thus, during injection molding of the insulator 50, the risk of displacement of the sealing ring 70 can be further reduced, improving processing efficiency.

With the overall shape of the reinforcing portion 71 defined or not defined, the reinforcing portion 71 has a rectangular longitudinal section, that is, has two planes perpendicular to each other. One plane contacts the extension portion 51, and another surface contacts the extension portion 51. The reinforcing portion 71 of this shape is easy to process and facilitates the flow molding of the extension portion 51, improving structural stability. In other examples, the longitudinal section shape of the reinforcing portion 71 may be triangular or irregular.

In an embodiment of this application, in the axial direction of the pole body 31, a ratio of an overlapping height between the reinforcing portion 71 and the extension portion 51 to a depth of the mounting hole 11 is at least 1/4 and not greater than 3/4.

Since excessively long and thin structures are not easy to process, in this example, to increase the creepage distance and facilitate processing, the overlapping height between the extension portion 51 and the reinforcing portion 71, that is, a height of the reinforcing portion 71 is set to d1, the depth of the mounting hole 11 is set to b1, and the ratio of the height d1 of the reinforcing portion 71 to the depth b1 of the mounting hole 11 is at least 1/4 and not greater than 3/4, for example, 1/4, 3/8, 1/2, 5/8, or 3/4. This ratio range can increase the creepage distance between the pole 30 and the top cover body 10 on a battery top-cover structure 100 of a specific dimension, and facilitate processing of the sealing ring 70 and assembly of the sealing ring 70 with the pole 30. In this embodiment, a partial structure of the insulator 50 is formed in the mounting hole 11 and abuts an end face of the reinforcing portion 71, and the extension portion 51 is formed on a lower surface of this partial structure.

Refer to FIG. 3. In an embodiment of this application, the reinforcing portion 71 satisfies one of the following conditions: in the axial direction of the pole body 31, the height value d1 of the reinforcing portion 71 is at least 0.8 mm and not greater than 1.2 mm.

Herein, the height value d1 of the reinforcing portion 71 is set to at least 0.8 mm and not greater than 1.2 mm, for example, 0.85 mm, 0.9 mm, 0.95 mm, 1 mm, 1.05 mm, 1.1 mm, 1.15 mm, or 1.2 mm, thereby further increasing the overlapping distance between the reinforcing portion 71 and the extension portion 51. In this way, the creepage distance requirement is satisfied, and processing and assembly of the sealing ring 70 are facilitated.

Alternatively, in a radial direction of the pole body 31, a ratio of a thickness of the reinforcing portion 71 to a distance between the pole body 31 and the hole wall of the mounting hole 11 is at least 1/2 and not greater than 2/3.

It can be understood that the thickness d2 of the reinforcing portion 71 should not be excessively small, which hinders processing, nor excessively large, which hinders the molding of the extension portion 51. The thickness d2 herein refers to a dimension of the reinforcing portion 71 in the radial direction of the mounting hole. The distance between the pole body 31 and the hole wall of the mounting hole 11 refers to a distance between a maximum diameter of the part of the pole body 31 located in the mounting hole 11 and the hole wall of the mounting hole 11, that is, b2. Setting the ratio of the thickness d2 of the reinforcing portion 71 to b2 to at least 1/2 and not greater than 2/3, that is, 1/2, 7/12, 2/3, or the like, can improve the structural strength of the reinforcing portion 71, facilitate processing and molding, and improve the overall stability of the battery top-cover structure 100.

Alternatively, in the radial direction of the pole body 31, the thickness value of the reinforcing portion 71 is at least 0.5 mm and not greater than 0.7 mm.

Designed based on general types of the pole 30, the range of the thickness d2 of the reinforcing portion 71 is set to at least 0.5 mm and not greater than 0.7 mm, for example, 0.55 mm, 0.6 mm, 0.65 mm, or 0.7 mm. In this way, the structural strength is high, the sealing effect is good, and the thickness dimension of the extension portion 51 can be satisfied for stable molding.

Refer to FIG. 5. In an embodiment of this application, an outer side of the reinforcing portion 71 facing away from the pole body 31 is formed with a first step 711 and a second step surface 712 arranged at an angle, an inner side of the extension portion 51 is formed with a third step surface 511 and a fourth step surface 512 arranged at an angle, the first step surface 711 contacts the third step surface 511, and the second step surface 712 contacts the fourth step surface 512.

In an example, formation of a protrusion or recess on the outer side of the reinforcing portion 71, that is, the side facing away from the pole body 31, leads to formation of the first step surface 711 and the second step surface 712 at an angle. Correspondingly, a matching recess or protrusion forms on the inner side of the extension portion 51, leading to formation of the third step surface 511 and the fourth step surface 512 at an angle. In this way, the contact area between the extension portion 51 and the reinforcing portion 71 in the vertical direction is further increased, thereby further increasing the creepage distance between the pole 30 and the top cover body 10 and improving safety.

Still refer to FIG. 3. In an embodiment of this application, a groove 311 is recessed in the middle of the outer periphery of the pole body 31, a convex ring 52 is formed on the inner periphery of the insulator 50, and the convex ring 52 is engaged in the groove 311.

In this example, the groove 311 is not limited to a position above the reinforcing portion 71 in the axial direction, and may alternatively be at an end of the reinforcing portion 71. An opening of the groove 311 faces the hole wall of the mounting hole 11, and the injection-molded convex ring 52 can closely fit with the groove 311, thereby increasing the area for contact with the insulator 50 and improving structural stability. Herein, limiting the groove 311 to the middle of the pole body 31 in the axial direction, that is, limiting the groove 311 to a non-end position of the pole body 31 in the axial direction, so that the formed convex ring 52 can limit the pole 30 in the axial direction, improving structural stability. In an example, the groove 311 is annularly disposed on the pole body 31, further improving structural stability.

In an embodiment of this application, a maximum outer diameter of the pole body 31 is smaller than a diameter of the mounting hole 11; an outer diameter of the base plate 32 is greater than a diameter of the mounting hole 11; the insulator 50 is formed on the top cover body 10 through injection molding; and the extension portion 51 extending into the mounting hole 11 and the convex ring 52 extending into the groove 311 are formed through injection molding.

The insulator 50 is formed through mold injection after the pole 30 is assembled with the sealing ring 70 and mounted in the mounting hole 11 of the top cover body 10. In this way, the extension portion 51 and the convex ring 52 are both formed through injection molding between the mounted pole 30 and the top cover body 10, thereby improving the fitting between the convex ring 52 and the groove 311 and the fitting between the extension portion 51 and the reinforcing portion 71, and also reducing assembly processes and improving processing efficiency.

In an embodiment of this application, an upper surface of the top cover body 10 is provided with a protruding positioning ring 12, the insulator 50 is formed with a positioning groove 53, and the positioning ring 12 is limited in the positioning groove 53.

In this example, the positioning ring 12 is annularly disposed on a periphery of the mounting hole 11, and the maximum cross-sectional area of the insulator 50 is greater than a cross-sectional area enclosed by the positioning ring 12, thereby increasing the area for contact with the top cover body 10 and improving stability. In an example, the positioning ring 12 is rectangular loop, matching the positioning groove 53, and a bottom shape of the insulator 50 is also rectangular, so that after molding, the contact area between the top cover body 10 and the insulator 50 can be increased, improving the connection stability between the two.

This application further proposes a battery module, where the battery module includes the battery as described in any of the above embodiments. Since the battery adopts all the technical solutions in all the above embodiments, it at least has all the beneficial effects brought by the technical solutions in the above embodiments, which are not repeated herein.

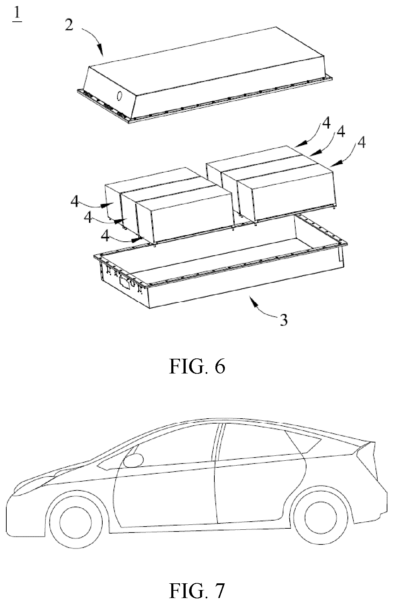

The battery may be a lithium-ion battery, a sodium-ion battery, a potassium-ion battery, an air battery, or the like. The specific type of the battery is not limited in this application, for example, it may be a battery module or a battery pack. Refer to FIG. 6. The battery module is a battery pack. A battery pack 1 may include a battery box and a plurality of batteries 4 disposed in the battery box. For a structure of the battery 4, reference may be made to the battery 100 in any of the above embodiments. The battery box includes an upper box body 2 and a lower box body 3, and the upper box body 2 can cover the lower box body 3 and form a closed space for accommodating the batteries 4. The plurality of battery modules 4 may be arranged in the battery box in any manner.

This application further proposes an electric device, where the electric device includes the battery module as described above. For a specific structure of the battery module, reference may be made to the above embodiments. Since the electric device adopts all the technical solutions in all the above embodiments, it at least has all the beneficial effects brought by the technical solutions in the above embodiments, which are not repeated herein.

The electric device may be a mobile phone, a laptop, a battery scooter, an electric vehicle, an energy storage station, or the like. The specific type of the electric device is not limited in this application. When the electric device includes a battery module, the battery module may provide electrical energy.

FIG. 7 is an exemplary electric device. The electric device is a pure electric vehicle, a hybrid electric vehicle, a plug-in hybrid electric vehicle, or the like. To satisfy the high power and high energy density requirements of the electric device for a battery, a battery pack may be used.

The above descriptions are only preferred embodiments of this application and do not therefore limit the patent scope of this application. Any equivalent structural transformations made based on the contents of the specification and drawings of this application under the inventive concept of this application, or direct/indirect application in other related technical fields, are included in the patent protection scope of this application.

## Claims

1. A battery, wherein the battery comprises:
a top cover body, wherein the top cover body is provided with a mounting hole;
a pole, wherein the pole comprises a base plate and a pole body that are connected to each other, the base plate is located on one side of the top cover body, and the pole body extends through the mounting hole;
an insulator, wherein at least part of the insulator is disposed on another side of the top cover body, the insulator is annularly disposed on a periphery of the pole body and fastens the pole to the top cover body, an extension portion is formed on a side of the insulator facing the base plate, and the extension portion is located between a hole wall of the mounting hole and the pole body; and
a sealing ring, wherein the sealing ring is located between the top cover body and the base plate and annularly disposed on the periphery of the pole body, and the sealing ring and the extension portion at least partially overlap in an axial direction of the pole body.

2. The battery according to claim 1, wherein a reinforcing portion protrudes from a side of the sealing ring facing the insulator, and the reinforcing portion extends into the mounting hole and overlaps with the extension portion in the axial direction of the pole body.

3. The battery according to claim 2, wherein the reinforcing portion is located between the extension portion and the pole body, and abuts the periphery of the pole body.

4. The battery according to claim 3, wherein the reinforcing portion is annular and contacts the periphery of the pole body, and the extension portion is annular and annularly disposed between the hole wall of the mounting hole and the reinforcing portion;
and/or a longitudinal section of the reinforcing portion is rectangular.

5. The battery according to any one of claims 2 to 4, wherein in the axial direction of the pole body, a ratio of an overlapping height between the reinforcing portion and the extension portion to a depth of the mounting hole is at least 1/4 and not greater than 3/4.

6. The battery according to any one of claims 2 to 5, wherein the reinforcing portion satisfies one of the following conditions:
in the axial direction of the pole body, a height value of the reinforcing portion is at least 0.8 mm and not greater than 1.2 mm; or
in a radial direction of the pole body, a ratio of a thickness of the reinforcing portion to a distance between the pole body and the hole wall of the mounting hole is at least 1/2 and not greater than 2/3; or
in a radial direction of the pole body, a thickness value of the reinforcing portion is at least 0.5 mm and not greater than 0.7 mm.

7. The battery according to any one of claims 2 to 6, wherein an outer side of the reinforcing portion facing away from the pole body is formed with a first step surface and a second step surface arranged at an angle; an inner side of the extension portion is formed with a third step surface and a fourth step surface arranged at an angle; the first step surface contacts the third step surface; and the second step surface contacts the fourth step surface.

8. The battery according to any one of claims 1 to 7, wherein a groove is recessed in the middle of an outer periphery of the pole body, a convex ring is formed on an inner periphery of the insulator, and the convex ring is engaged in the groove.

9. The battery according to claim 8, wherein a maximum outer diameter of the pole body is smaller than a diameter of the mounting hole, an outer diameter of the base plate is greater than the diameter of the mounting hole, the insulator is formed on the top cover body through injection molding, and the extension portion extending into the mounting hole and the convex ring extending into the groove are formed through injection molding.

10. The battery according to any one of claims 1 to 9, wherein a positioning ring protrudes from a surface of the top cover body away from the base plate, a positioning groove is formed in the insulator, and the positioning ring is limited in the positioning groove.

11. A battery module, wherein the battery module comprises the battery according to any one of claims 1 to 10.

12. An electric device, wherein the electric device comprises the battery module according to claim 11.
